# EUROPÄISCHE PATENTSCHRIFT

(11) **EP 2 196 697 B1**
(45) Veröffentlichungstag und Bekanntmachung des Hinweises auf die Patenterteilung: **27.01.2016**
(21) Anmeldenummer: 09012252.4
(22) Anmeldetag: 28.09.2009
(51) Int. Cl.: F16F 15/14

(54) **Rotierendes Maschinenteil**
Rotating machine part
Pièce de machine rotative

(30) Priorität: 13.10.2008 DE 102008050989
(43) Veröffentlichungstag der Anmeldung: 16.06.2010
(73) Patentinhaber: Isoloc Schwingungstechnik GmbH, 70499 Stuttgart (DE)
(72) Erfinder: Güney, Süleyman, Dr.-Ing., 70499 Stuttgart (DE); Schürrle, Uwe, 70499 Stuttgart (DE)
(74) Vertreter: Fleck, Hermann-Josef

(56) Entgegenhaltungen:
- DE-A1- 3 632 418
- DE-U1- 9 011 147
- US-A1- 2003 139 217

## Beschreibung

Die Erfindung bezieht sich auf ein rotierendes Maschinenteil mit einer gedämpften Schwingungstilgervorrichtung aus Zusatzmasse und Zusatzfeder-/Dämpfungssystem gemäß dem Oberbegriff des Anspruchs 1.

Ein Maschinenteil dieser Art ist in der DE 36 32 418 A1 angegeben. Bei einem in dieser Druckschrift offenbarten Ausführungsbeispiel wird eine Dämpfungsmasse in einem hohlförmigen Bauteil, wie z. B. einer Antriebswelle, elastisch gelagert, wodurch sich zum einen die Biegesteifigkeit erhöht und zum anderen durch die Dämpfungsmasse das Schwingungsverhalten und die Resonanzfrequenz des zu bedämpfenden Bauteils verändert wird. Bei einem Ausführungsbeispiel ist die als Abstimmmasse ausgelegte Dämpfungsmasse von einer elastischen Ummantelung umgeben, die wiederum an der Innenwandung der rohrförmigen Antriebswelle anliegt. Dabei sind die Abmessungen der rohrförmigen Antriebswelle und der Ummantelung so gewählt, dass sich ein Presssitz zwischen diesen Teilen einstellt. Neben der Abstimmmasse weist die Antriebswelle eine Tilgermasse auf, die über eine weitere elastische Schicht mit einer Hülse verbunden ist, welche sich in axialer Richtung auch über die Abstimmmasse erstrecken kann. Die elastische Schicht ist weicher ausgelegt als die Ummantelung, so dass die Tilgermasse unabhängig von der Abstimmmasse schwingen kann. Bei einer in dieser Druckschrift angegebenen anderen Ausführungsform nimmt die Antriebswelle einen elastisch verformbaren Körper auf, der aus zwei spiegelbildlich aufgebauten Teilkörpern besteht und von einem Spanndorn durchdrungen wird. Der Spanndorn weist an seinen Enden jeweils ein Gewindeloch mit Schrauben auf. Die Köpfe der Schrauben wirken auf stirnseitig an dem elastisch verformbaren Körper angeordnete Stützplatten, so dass beim Anziehen der Schrauben die Stützplatten den elastisch verformbaren Körper zusammendrücken, der sich dadurch aufweitet und sich gegen die Wandung der Antriebswelle presst. Der Spanndorn weist in seinem mittleren Abschnitt eine zylinderförmige Erweiterung auf, durch die der Dämpfmasse des Formkörpers zusätzliche Masse verliehen wird.

Ein weiteres Maschinenteil mit einer gedämpften Schwingungstilgervorrichtung mit einem Elastomer-Element und einer Dämpfermasse ist in der US 2003/139217 A1 gezeigt. Hierbei können für verschiedene Feder-/Dämpfungseigenschaften unterschiedliche Elastomer-Körper und Formen von Dämpfungsmassen gewählt werden.

In der DE 90 11 147 U1 ist ein rohrförmiges Konstruktionselement mit Mitteln zur Schalldämpfung, insbesondere für Antriebswellen von Kraftfahrzeugen, gezeigt. In dem rohrförmigen Konstruktionselement ist ein auf seiner Außenfläche mit einer plastisch-elastischen Dämpfmasse beschichtetes Schlitzrohr eingespannt, wobei die Dämpfmasse etwa 50 bis 200 µm dick ist, um eine Schalldämpfung zu bewirken.

An rotierenden Maschinenteilen, wie z. B. Wellen, Walzen oder Dorne von Textilmaschinen, Druckmaschinen, Produktionsmaschinen für Zeitungen oder dgl. entstehen durch den eigenen Betrieb der Maschinen oder aber durch Anregungen von außen resonanzartige Schwingungen an den Maschinenteilen. Oft sind die rotierenden Maschinenteile unter anderem auch aus Kostengründen hohl ausgebildet, und die Biegeeigenfrequenzen solcher Maschinenteile liegen in relativ niedrigen Frequenzbereichen von in der Regel 5 bis 250 Hz. Die Maschinenteile haben sehr geringe Materialdämpfung, so dass durch die Anregung der Biegeeigenfrequenzen die resonanzartigen Schwingungen an diesen Maschinenteilen begünstigt werden. Die Schwingungen beeinflussen die Funktionalität, Produktivität, Qualität und Genauigkeit der Bearbeitung mit diesen Maschinen negativ.

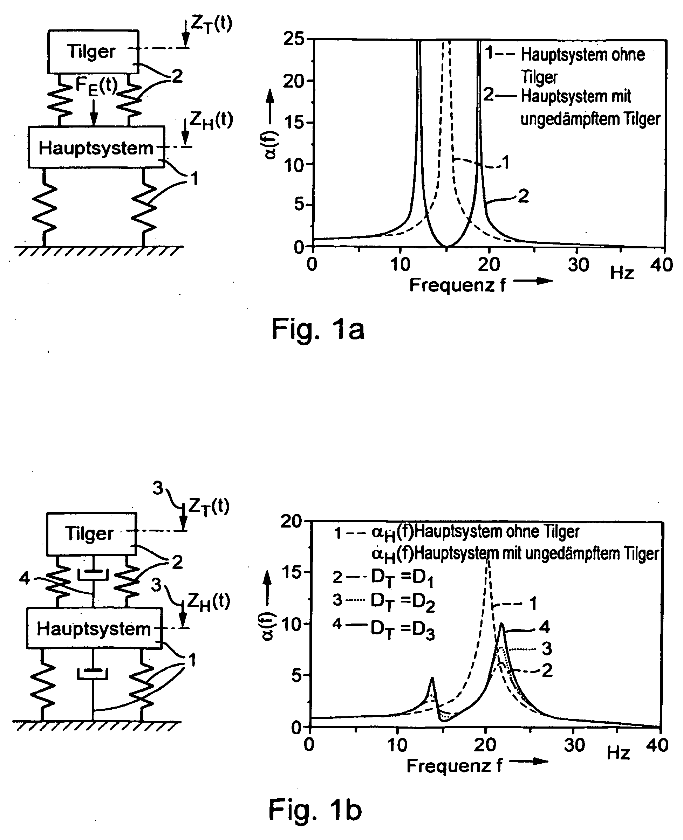

Zur Tilgung der resonanzartigen Schwingungen rotierender Teile von Maschinen ist es bekannt, ein solches Hauptsystem mit einem Zusatzschwinger mit Zusatzmasse sowie Zusatzfeder-/Dämpfersystem zu versehen und Masse, Steifigkeit und Dämpfungskoeffizienten so zu optimieren, dass die Schwingungen des Hauptsystems klein werden. Diese prinzipielle Vorgehensweise ist in Fig. 1 gezeigt, wobei das obere Teilbild (a) auf der linken Seite ein mechanisches Prinzipschaltbild eines ungedämpften Schwingungstilgungssystems mit Federn und Masse des Hauptsystems 1 sowie Federn und Masse des Zusatzschwingers 2 zeigt und die rechte Darstellung die Schwingungsamplituden über der Frequenz für das Hauptsystem ohne Schwingungstilger (Kurve 1) und das Hauptsystem mit ungedämpftem Schwingungstilger (Kurve 2) zeigt. In der unteren Abbildung (b) ist ein Schwingungssystem aus einem Hauptsystem 1 mit Hauptmasse, Federn und Dämpfung sowie dem Zusatzschwinger 2 mit Zusatzmasse 3 und Zusatzfeder-/Dämpfersystem 4 gezeigt, also ein gedämpfter Schwingungstilger, sowie ein Schwingungsdiagramm der Schwingungsamplituden in Abhängigkeit der Frequenz für ein Hauptsystem ohne Tilger (Kurve 1) und ein Hauptsystem mit verschiedenen gedämpften Tilgern (Kurven 2, 3, 4). Beide Arten von Schwingungstilgern können konstruktiv auf verschiedene Weise realisiert werden, beispielsweise als Federtilger, Pendeltilger, Drehpendeltilger oder Stoßtilger. Dabei sind die Schwingungstilger für rotierende Maschinenteile konstruktiv aufwändig.

Der Erfindung liegt die Aufgabe zugrunde, ein rotierendes Maschinenteil mit einer gedämpften Schwingungstilgervorrichtung der eingangs genannten Art bereit zu stellen, die bei möglichst einfachem Aufbau gute Optimierungsmöglichkeiten bietet.

Diese Aufgabe wird mit den Merkmalen des Anspruches 1 gelöst. Hierbei ist vorgesehen, dass die Schwingungstilgervorrichtung in einen konzentrischen Hohlraum des Maschinenteils eingebracht ist und dass die Zusatzmasse zentral angeordnet ist und das Zusatzfeder-/Dämpfungssystem aus mindestens einer elastischen dämpfenden Schicht gebildet ist, die konzentrisch zwischen der Zusatzmasse und der den Hohlraum begrenzenden Innenfläche des Maschinenteils angeordnet ist.

Mit diesem Aufbau wird eine kompakte, stabile Ausbildung des rotierenden Maschinenteils mit der Schwingungstilgervorrichtung erhalten, mit der die Schwingungen des drehenden Maschinenteils bei einer bestimmten Frequenz aber auch in einem bestimmten Frequenzbereich reduziert werden. Zur Optimierung der Tilgereigenschaften sind dabei die Maßnahmen von Vorteil, dass die Zusatzmasse in ihrem Außenumfang variierbar ist.

Zu einem einfachen Einbau und konstruktiven Aufbau sowie einer vorteilhaften Funktionsweise tragen die Maßnahmen bei, dass die Schicht in einer konzentrischen Hülse aufgenommen ist, die in ihrem Umfang variierbar ist.

Der Aufbau und die Funktion werden ferner dadurch begünstigt, dass die Zusatzmasse und/oder die Hülse mindestens einen Längsschlitz aufweist. Der Längsschlitz lässt ein einfaches Variieren des Außenumfangs und damit Optimieren der Schwingungstilgereigenschaften über die eingestellte Druckbeanspruchung zu.

Dabei bestehen vorteilhafte Ausgestaltungen darin, dass die Zusatzmasse und/oder die Hülse in Längsrichtung in mindestens zwei Hälften geteilt ist.

Der Aufbau und die Funktion werden ferner dadurch begünstigt, dass mindestens ein Spreizglied vorhanden ist, mit dem der Umfang der Zusatzmasse verstellbar ist.

Eine für den Aufbau und die Funktion vorteilhafte Ausgestaltung wird dabei dadurch erreicht, dass das mindestens eine Spreizglied konisch geformt ist und in eine konzentrische Aufnahme im Inneren der Zusatzmasse eingebracht und darin axial verstellbar gelagert ist. Mittels der konischen Ausbildung des Spreizgliedes und der axialen Verstellung können die Tilgereigenschaften stabil und bei einfacher Handhabung optimiert werden.

Dabei besteht eine vorteilhafte Ausgestaltung darin, dass das mindestens eine Spreizglied mit einem Außengewinde und die Aufnahme mit einem an dieses angepassten Innengewinde versehen ist.

Eine weitere vorteilhafte Ausgestaltung besteht darin, dass in das mindestens eine Spreizglied eine zentrale Gewindebohrung eingebracht ist, durch die ein konzentrischer Gewindestab relativ zu dem Spreizglied verdrehbar geführt ist.

Eine eindeutige Führung beim Variieren der Verlagerung der Zusatzmasse wird dadurch erreicht, dass der durch den Längsschlitz getrennte Teil der Zusatzmasse einerseits mit mehreren rechtwinklig (normal) zur Schlitzebene verlaufenden Führungszapfen und andererseits mit an diese angepassten Führungslöchern versehen ist.

Die Erfindung wird nachfolgend anhand von Ausführungsbeispielen unter Bezugnahme auf die Zeichnungen näher erläutert. Es zeigen:
- Fig. 1a) und b): ein Hauptsystem mit einem Schwingungstilger in ungedämpfter (a) bzw. gedämpfter (b) Ausführung jeweils mit mechanischem Ersatzschaltbild und einem Amplitudenfrequenzgang,
- Fig. 2: ein Prinzipschaltbild eines Maschinenteils mit eingebrachter Schwingungstilgervorrichtung,
- Fig. 3: ein Diagramm zum Schwingungsverlauf über der Zeit sowie ein Diagramm der Schwingungsamplitude über der Frequenz jeweils ohne (1) und mit (2) Schwingungstilger,
- Fig. 4: ein erstes Ausführungsbeispiel für eine in einem rotierenden Maschinenteil einzubauende Schwingungstilgervorrichtung in einem teilweisen Längsschnitt und einem Querschnitt,
- Fig. 5A und 5B: ein weiteres Ausführungsbeispiel für ein rotierendes Maschinenteil mit teilweise eingesetzter Schwingungstilgervorrichtung im Längsschnitt bzw. Querschnitt,
- Fig. 5C: eine zum Einbringen der Schwingungstilgervorrichtung in das rotierende Maschinenteil verwendbare Einschlagscheibe in einer axialen Ansicht und einer seitlichen Ansicht,
- Fig. 6A bis 6D: ein weiteres Ausführungsbeispiel für eine in einem rotierenden Maschinenteil eingesetzte Schwingungstilgervorrichtung in einem Längsschnitt (Fig. 6A), einem Querschnitt (Fig. 6B), einer auseinander gezogenen perspektivischen Ansicht der Schwingungstilgervorrichtung (Fig. 6C) und einer teilweise aufgeschnittenen Darstellung der in das rotierende Maschinenteil eingesetzten Schwingungstilgervorrichtung in perspektivischer Ansicht (Fig. 6D),
- Fig. 6E: einen Gewindeabschnitt im Bereich eines in eine Zusatzmasse eingesetzten Spreizgliedes bei dem Ausführungsbeispiel nach den Fig. 6A bis 6D,
- Fig. 7A bis 7C: ein weiteres Ausführungsbeispiel einer in ein rotierendes Maschinenteil eingesetzten Schwingungstilgervorrichtung im Längsschnitt mit teilweise aufgebrochener Schwingungstilgervorrichtung, im Querschnitt und in perspektivischer Einzeldarstellung des rotierenden Maschinenteils und wesentlicher Teile der Schwingungstilgervorrichtung, wobei die Schlitze der Zusatzmasse und Hülsen symmetrisch angeordnet werden,
- Fig. 8: eine weitere Ausführungsvariante der Schwingungstilgervorrichtung nach Fig. 7 im Längsschnitt und im Querschnitt,
- Fig. 9: ein weiteres Ausführungsbeispiel einer in einem rotierenden Maschinenteil eingesetzten Schwingungstilgervorrichtung in aufgeschnittener, perspektivischer Darstellung und
- Fig. 10A bis 10C: weitere Darstellungen zu dem Einbau der Schwingungstilgervorrichtung in das rotierende Maschinenteil nach Fig. 9 im Längsschnitt, im Querschnitt bzw. in perspektivischer Ansicht, bei dem die Druckbeanspruchung über die Spindel eingestellt wird.

Wie eingangs beschrieben, zeigt Fig. 1a) ein schematisches Ersatzschaltbild für ein System mit einem ungedämpften Schwingungstilger aus einem Hauptsystem 1 mit Masse und Federanordnung sowie einem Zusatzschwinger 2 mit Zusatzmasse und Zusatzfeder sowie ein entsprechendes Diagramm eines Amplitudenfrequenzganges für ein Hauptsystem ohne Schwingungstilger (1) und ein Hauptsystem mit ungedämpftem Tilger (2) und Fig. 1b) ein Ersatzschaltbild für ein System mit gedämpftem Schwingungstilger aus einem Hauptsystem 1 mit Hauptmasse, Federanordnung und Dämpfung sowie einem Zusatzschwinger 2 mit Zusatzmasse 3 und Zusatzfeder-/Dämpfersystem 4 und einen entsprechenden Amplitudenfrequenzgang für ein Hauptsystem ohne Tilger (1) und ein Hauptsystem mit verschiedenen gedämpften Tilgern (2, 3, 4). Diese Aufbauten und Verläufe der Amplituden über der Frequenz (Amplitudenfrequenzgänge) sind an sich bekannt.

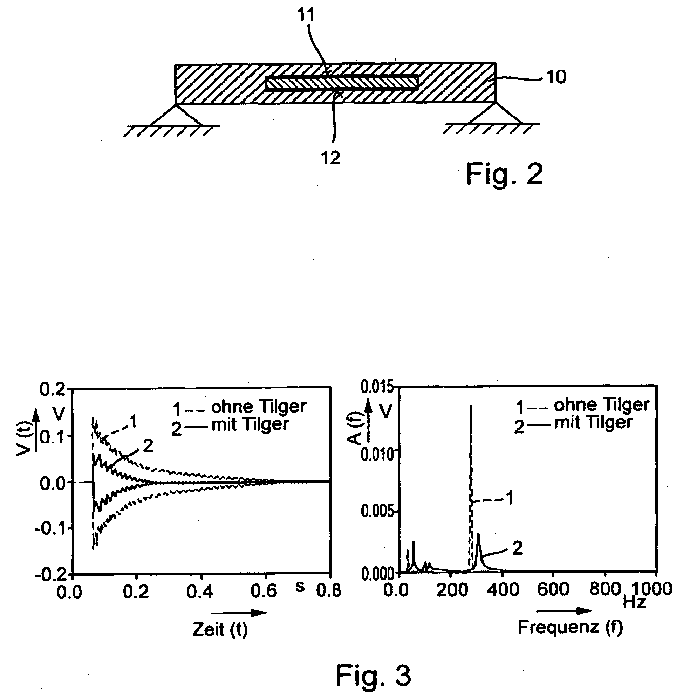

In Fig. 2 ist eine Hauptmasse 10, beispielsweise ein Maschinenteil, mit einer in einem darin ausgebildeten Hohlraum eingebrachten Schwingungstilgervorrichtung gezeigt, die eine Zusatzmasse 12 und eine zwischen der den Hohlraum begrenzenden Wandung und der Zusatzmasse 12 angeordnete elastische dämpfende Schicht 11 aufweist. Durch die Einbringung der Schwingungstilgervorrichtung als Zusatzschwinger können je nach Ausbildung und Einstellung der Schwingungstilgervorrichtung die Schwingungseigenschaften des Gesamtsystems beeinflusst werden, so dass auf diese Weise insbesondere auch ein rotierendes Maschinenteil als Hauptmasse 10, wie z. B. ein Dorn, eine Walze, oder eine Welle einer Maschine, etwa einer Textilmaschine oder einer Druckmaschine oder einer anderen Maschine mit rotierenden Maschinenteilen, in seinem Schwingungsverhalten positiv beeinflusst werden kann bzw. deren Schwingungen erheblich reduziert werden. Hierzu wird auf die elastische dämpfende Schicht 11 ein definierter Druck ausgeübt, beispielsweise durch Variieren des Außenumfangs der Zusatzmasse 12. Durch diese Konstruktion wird einerseits der Ein- und Ausbau des Tilgers in den insbesondere zylinderförmig ausgebildeten und zentral angeordneten Hohlraum der Hauptmasse 10 erleichtert und andererseits auch die Feder-/Dämpfungseigenschaft variiert.

Fig. 3 zeigt Messergebnisse beispielsweise an einem Dorn für den Schwingungsverlauf v (t) über der Zeit t und der Schwingungsamplitude A (f) in Abhängigkeit von der Frequenz f ohne (1) und mit (2) Schwingungstilgervorrichtung. Es zeigt sich, dass die Schwingungsamplituden ohne Schwingungstilgervorrichtung wesentlich ausgeprägter sind als mit Schwingungstilgervorrichtung.

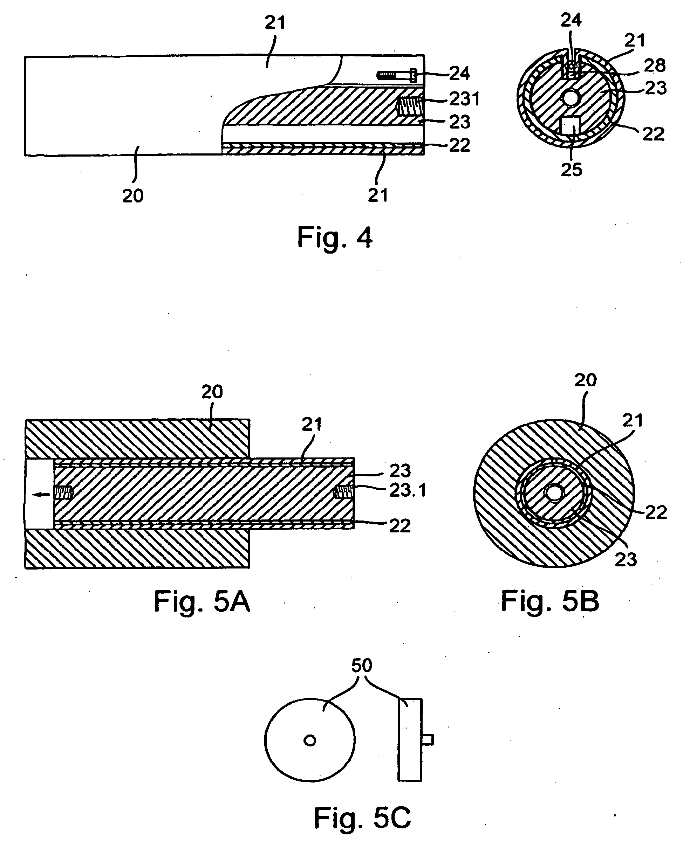

Fig. 4 zeigt ein Ausführungsbeispiel einer in ein rotierendes Maschinenteil 20 als Hauptmasse in dessen zylinderförmigen Hohlraum konzentrisch einzusetzenden Schwingungstilgervorrichtung, die von außen nach innen eine Hülse 21, einen elastischen Dämpfungskörper 22 in Form einer elastischen kreisringförmigen Schicht und eine Zusatzmasse 23 aufweist. Die Hülse 21 und der elastische Dämpfungskörper 22 sind von einem oder zwei längs verlaufenden Schlitzen unterbrochen und die Hülse 21 ist entlang der Unterbrechungslinie mit nach innen zur Längsachse gerichteten eingebogenen Abschnitten versehen, die in in der Zusatzmasse 23 eingearbeitete längs verlaufende Nuten 25 hineinragen. Dabei sind die in die eine Längsnut hinein ragenden beiderseitigen Abschnitte der Hülse 21 mittels einer in Längsrichtung eingesetzten Schraube 24 lösbar verbunden. Bei diesem Ausführungsbeispiel muss die Zusatzmasse nicht in zwei Teile geteilt werden. Bei der Ausführung nach Fig. 4 wird die Vorspannung über die Hülse eingestellt. Die Schraube 24 besitzt auf ihrer zur Stirnseite der Schwingungstilgervorrichtung gerichteten Außenseite einen Kopf mit einem Innen- oder Außensechskant zum Einsetzen eines Schraubenschlüssels entlang der Nut 25. In der Zusatzmasse 23 ist stirnseitig eine Ausnehmung 23.1 zum Aufsetzen einer Schlagscheibe 50 mit einem zentralen Zapfen versehen, so dass die zusammengebaute Schwingungstilgervorrichtung problemlos in den zylindrischen Hohlraum des rotierenden Maschinenteils 20 eingebracht werden kann, wie aus den Fig. 5A und 5C ersichtlich. Der elastische Dämpfungskörper 22 kann mehr oder weniger stark zusammengepresst werden und ist z. B. aus Elastomermaterial, anderem Kunststoffmaterial und/oder Gummimaterial, gegebenenfalls auch mit Metalleinlage, hergestellt. Die Hülse 21 dient als Vorspannhülse, um den elastischen Dämpfungskörper 22 mehr oder weniger stark zusammenzudrücken und den Ein- und Ausbau der Schwingungstilgervorrichtung mit einfachen Maßnahmen zu ermöglichen und lässt außerdem eine Druckbeanspruchung zur Einstellung der Schwingungseigenschaften z. B. durch Auseinanderdrücken der Zusatzmasse 23 zu. Die Vorspannung wird dabei über die Passung erreicht. Im Grunde würde für die Ein- und Ausbaufunktion der Schwingungstilgervorrichtung eine Nut 25 in der Zusatzmasse 23 ausreichen, eine zweite gegenüberliegende Nut ist aber aus Symmetriegründen und zum Erreichen eines günstigen Massenträgheitsmoments von Vorteil. In der Ausnehmung 23.1 ist auch ein Innengewinde vorgesehen, so dass z. B. ein Gewindezapfen zum Herausnehmen der Schwingungstilgervorrichtung aus dem Maschinenteil oder ein anderes Befestigungsmittel eingeschraubt werden kann.

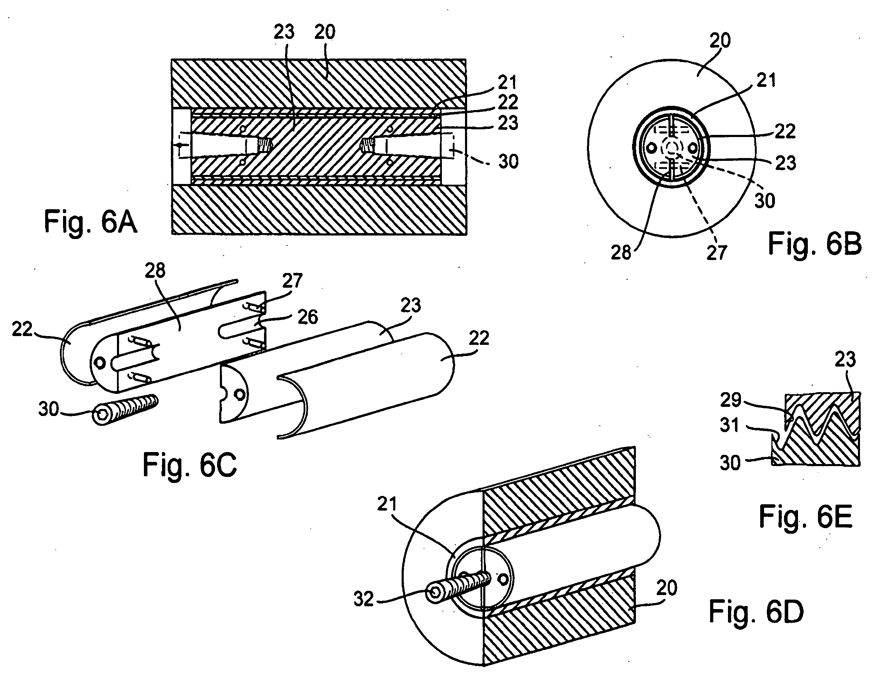

Bei dem in den Fig. 6A bis 6E gezeigten Ausführungsbeispiel sind entsprechende Teile wie bei dem Ausführungsbeispiel nach den Fig. 4 und 5A bis 5C mit entsprechenden Bezugszeichen bezeichnet. Die Schwingungstilgervorrichtung ist in das rotierende Maschinenteil 20 eingesetzt und weist von innen nach außen die Hülse 21, den elastischen Dämpfungskörper 22 und die Zusatzmasse 23 auf, die aus zwei entlang einer Mittellängsebene getrennten Hälften besteht. In der Mittellängsebene stehen auf einer Seite senkrecht Führungszapfen 27 vor, die in darauf in Lage und Form abgestimmte Führungslöcher in der Trennungsebene der gegenüberliegenden Hälfte der Zusatzmasse 23 verschiebbar eingreifen. Dabei können die Führungszapfen 27 als von der Zusatzmasse 23 lösbare getrennte Teile ausgebildet oder mit ihr verbunden sein.

Von beiden Stirnseiten der Zusatzmasse 23 aus sind in axialer Richtung verlaufende, zentrale Aufnahmen 26 konzentrisch eingebracht, die sich nach innen konisch bzw. kegelstumpfförmig verjüngen und mit einem Innengewinde versehen sind, wie Fig. 6E zeigt. Zum Einsetzen in die Aufnahmen 26 sind ebenfalls konische bzw. kegelstumpfförmige Spreizglieder 30 mit einem an das Innengewinde 29 der Aufnahmen 26 angepassten Außengewinde 31 vorhanden, die beim Einschrauben in die Aufnahme 26 die beiden Hälften der Zusatzmasse 23 auseinanderdrücken, wobei eine eindeutige Führung der beiden Hälften mittels der Führungszapfen 27 sichergestellt ist, während sich der Längsschlitz 28 entlang der Mittellängsebene zwischen den beiden Hälften der Zusatzmasse 23 vergrößert und der Außenumfang erweitert wird. Ein dabei auftretendes geringes Abweichen des Außenumfangs der Zusatzmasse 23 von der Kreisform ist praktisch nicht störend. Auf diese Weise wird nicht nur das Massenträgheitsmoment der Zusatzmasse 23 variierbar, sondern auch der elastische Dämpfungskörper 22 mehr oder weniger stark zusammengedrückt, der sich gegen die Hülse 21 abstützt. Die Hülse 21, die beispielsweise ebenfalls aus zwei Hälften bestehen kann, liegt mit ihrer Außenseite an der den zylindrischen Hohlraum des Maschinenteils 20 begrenzenden Wandung an. Auch der elastische Dämpfungskörper 22 kann entsprechend in zwei schalenartige Hälften aufgeteilt sein oder aber auch nur mit einem Längsschlitz versehen sein. Zum Einsetzen und Entnehmen der Schwingungstilgervorrichtung in das bzw. aus dem Maschinenteil 20 sind stirnseitig in der Zusatzmasse 23 z. B. kleine Gewindebohrungen in jeder Hälfte angeordnet. Durch das mehr oder weniger starke Zusammendrücken des Dämpfungskörpers 22 ändert sich dessen Dämpfungs- bzw. Schwingungsverhalten.

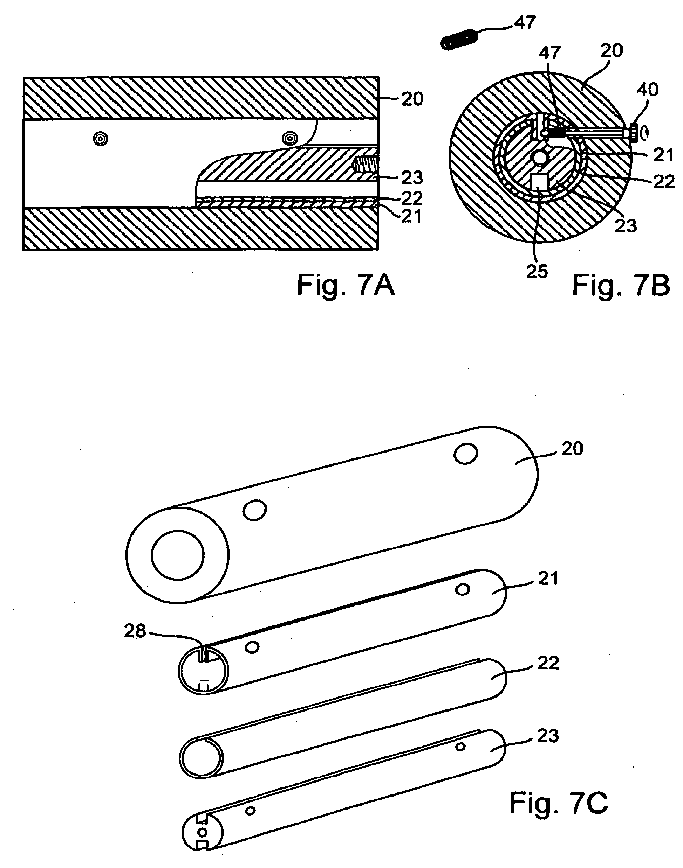

Bei dem in den Fig. 7A bis 7C gezeigten weiteren Ausführungsbeispiel ist die Schwingungstilgervorrichtung ähnlich ausgebildet wie bei dem Ausführungsbeispiel nach Fig. 4; jedoch ist die Hülse 21 in der Nut 25 nicht mittels einer längs verlaufenden Schraube, sondern mit mindestens einer quer durch eine entsprechende Bohrung des elastischen Dämpfungskörpers 22 und der Zusatzmasse 23 geführten Schraube jeweils nahe der beiden stirnseitigen Enden fixiert. Auch in das rotierende Maschinenteil 20 sind entsprechend positionierte Querbohrungen eingebracht, durch die ein Schlüssel 40 eingesetzt werden kann, um die Schraube, beispielsweise ausgebildet als Gewindestift 47, vorzugsweise über einen Innensechskant zu betätigen.

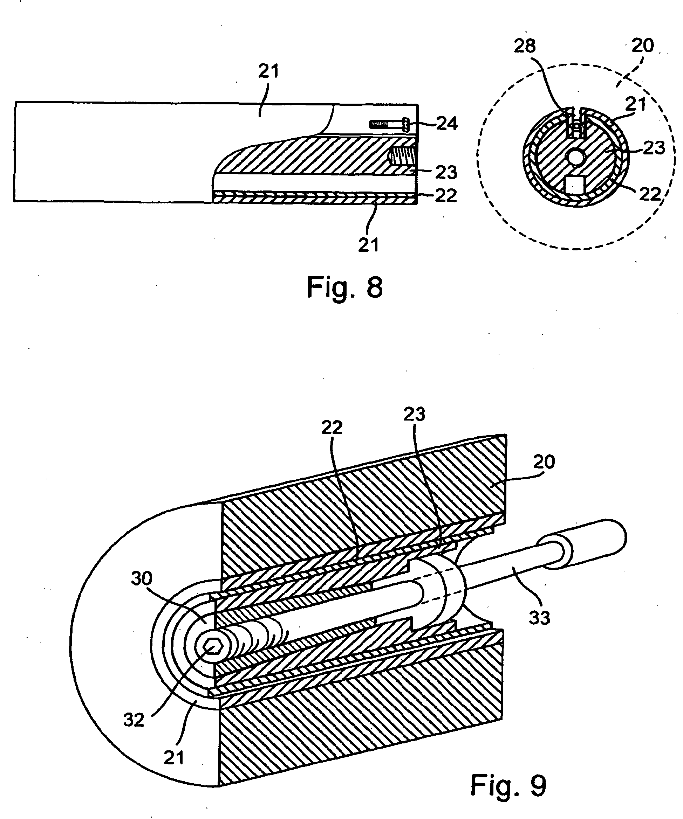

Fig. 8 zeigt den Einsatz der Schwingungstilgervorrichtung nach Fig. 4 in dem rotierenden Maschinenteil 20, wobei auch die konzentrische Anordnung der Schwingungstilgervorrichtung bezüglich des rotierenden Maschinenteils 20 ersichtlich ist.

Bei dem Ausführungsbeispiel nach Fig. 9 wird ähnlich wie bei dem Ausführungsbeispiel nach den Fig. 6A bis 6D ein konisches Spreizglied 30 auf einer oder beiden Seiten der Schwingungstilgervorrichtung axial verstellbar in eine konische Aufnahme der Zusatzmasse 23 mehr oder weniger weit hinein- oder herausgedreht, wobei das Spreizglied 30 mit einer zentralen Gewindebohrung versehen ist, in die eine zentrale axiale Gewindespindel 33 eingedreht ist, welche in axialer Richtung unverschiebbar im Inneren der Zusatzmasse 23 gehalten ist. Die Gewindespindel 33 kann mittels einer stirnseitig angeordneten Werkzeugaufnahme 32 gedreht werden. Sind auf beiden in axialer Richtung beabstandeten Längsseiten der Schwingungstilgervorrichtung solche Spreizglieder 30 aufgesetzt, so sind deren Gewindeverläufe und das entsprechende Gewinde der Gewindespindel 33 zueinander entgegengesetzt, so dass das jeweilige Spreizglied 30 bei Drehen der Gewindespindel 33 in einer Richtung eingezogen und in anderer Drehrichtung axial nach außen bewegt wird.

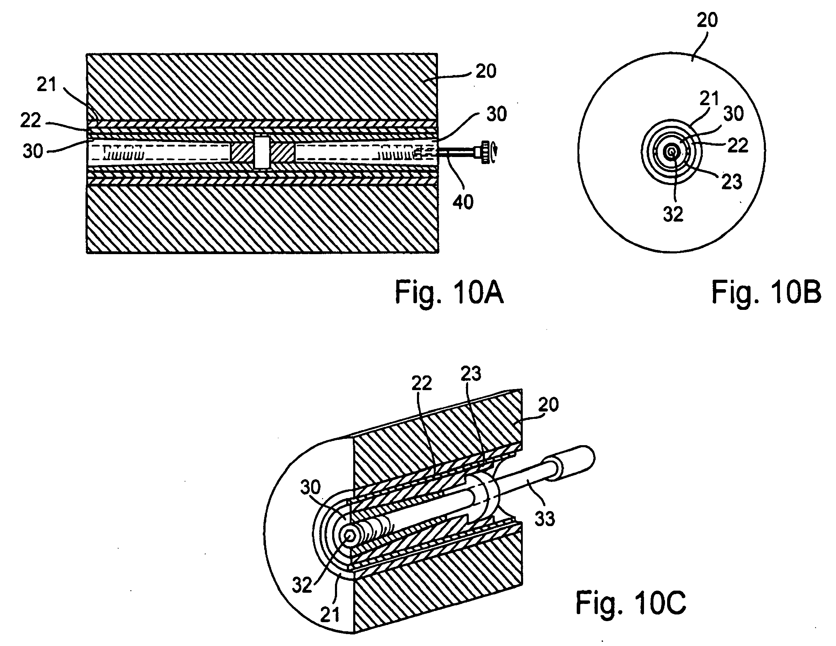

In den Fig. 10A und 10B ist der Einsatz der Schwingungstilgervorrichtung nach Fig. 9 in das rotierende Maschinenteil 20 im Längsschnitt bzw. im Querschnitt gezeigt, wobei ein Schlüssel 40 in die Gewindespindel 33 eingesetzt ist. Fig. 10C zeigt wiederum einen Abschnitt des rotierenden Maschinenteils 20 mit der Schwingungstilgervorrichtung gemäß dem Ausführungsbeispiel nach Fig. 9. Auch mit der Ausbildung der Schwingungstilgervorrichtung nach den Fig. 9 und 10A bis 10C wird die Verstellung der Zusatzmasse 23 zum Variieren des Umfangs und Optimieren der Schwingungseigenschaften ermöglicht, wobei auch der Dämpfungskörper 22 mehr oder weniger stark zusammendrückbar ist, um seine Dämpfungseigenschaften zu variieren.

## Patentansprüche

1. Rotierendes Maschinenteil mit einer gedämpften Schwingungstilgervorrichtung aus Zusatzmasse (23) und Zusatzfeder-/Dämpfungssystem, wobei die Schwingungstilgervorrichtung in einen konzentrischen Hohlraum des Maschinenteils (20) eingebracht ist, die Zusatzmasse (23) zentral angeordnet ist und das Zusatzfeder-/Dämpfungssystem aus mindestens einer elastischen dämpfenden Schicht (22) gebildet ist, die konzentrisch zwischen der Zusatzmasse (23) und der den Hohlraum begrenzenden Innenfläche des Maschinenteils (20) angeordnet ist,
**dadurch gekennzeichnet,**
**dass** die Zusatzmasse (23) in ihrem Außenumfang variierbar ist.

2. Rotierendes Maschinenteil nach Anspruch 1,
**dadurch gekennzeichnet,**
**dass** die Schicht (22) in einer konzentrischen Hülse (21) aufgenommen ist, die in ihrem Umfang variierbar ist.

3. Rotierendes Maschinenteil nach Anspruch 1 oder 2,
**dadurch gekennzeichnet,**
**dass** die Zusatzmasse (23) und/oder die Hülse (21) mindestens einen Längsschlitz (28) aufweist/aufweisen.

4. Rotierendes Maschinenteil nach Anspruch 3,
**dadurch gekennzeichnet,**
**dass** die Zusatzmasse (23) und/oder die Hülse (21) in Längsrichtung in mindestens zwei Hälften geteilt ist/sind.

5. Rotierendes Maschinenteil nach einem der vorhergehenden Ansprüche,
**dadurch gekennzeichnet,**
**dass** mindestens ein Spreizglied (30) vorhanden ist, mit dem der Umfang der Zusatzmasse (23) verstellbar ist.

6. Rotierendes Maschinenteil nach Anspruch 5,
**dadurch gekennzeichnet,**
**dass** das mindestens eine Spreizglied (30) konisch geformt ist und in eine konzentrische Aufnahme (26) im Inneren der Zusatzmasse (23) eingebracht und darin axial verstellbar gelagert ist.

7. Rotierendes Maschinenteil nach Anspruch 6,
**dadurch gekennzeichnet,**
**dass** das mindestens eine Spreizglied (30) mit einem Außengewinde (31) und die Aufnahme (26) mit einem an dieses angepassten Innengewinde (29) versehen ist.

8. Rotierendes Maschinenteil nach Anspruch 6,
**dadurch gekennzeichnet,**
**dass** in das mindestens eine Spreizglied (30) eine zentrale Gewindebohrung eingebracht ist, durch die ein konzentrischer Gewindestab relativ zu dem Spreizglied (30) verdrehbar geführt ist.

9. Rotierendes Maschinenteil nach einem der Ansprüche 3 bis 8,
**dadurch gekennzeichnet,**
**dass** der durch den Längsschlitz (28) getrennte Teil der Zusatzmasse (23) einerseits mit mehreren rechtwinklig zur Schlitzebene verlaufenden Führungszapfen (27) und andererseits mit an diese angepassten Führungslöchern versehen ist.

## Claims

1. A rotating machine part with a damped vibration damping device composed of an additional mass (23) and an additional spring/damping system; the vibration damping device is accommodated in a concentric cavity of the machine part (20), the additional mass (23) is centrally positioned, and the additional spring/damping system is composed of at least one elastically damping layer (22), which is positioned concentrically between the additional mass (23) and the machine part (20) that adjoins the cavity,
**characterized in that**
the additional mass (23) has a variable outer circumference.

2. The rotating machine part according to claim 1,
**characterized in that**
the layer (22) is accommodated in a concentric sleeve (21) that has a variable outer circumference.

3. The rotating machine part according to claim 1 or 2,
**characterized in that**
the additional mass (23) and/or the sleeve (21) has/have at least one longitudinal slit (28).

4. The rotating machine part according to claim 3,
**characterized in that**
the additional mass (23) and/or the sleeve (21) is/are divided into at least two halves in the longitudinal direction.

5. The rotating machine part according to one of the preceding claims,
**characterized in that**
at least one expansion element (30) is provided, which is able to adjust the circumference of the additional mass (23).

6. The rotating machine part according to claim 5,
**characterized in that**
the at least one expansion element (30) is conically formed, accommodated in a conical recess (26) on the inside of the additional mass (23), and supported so that it is axially adjustable therein.

7. The rotating machine part according to claim 6,
**characterized in that**
the at least one expansion element (30) is provided with an external thread (31) and the recess (26) is provided with an internal thread (29) that is matched to this external thread.

8. The rotating machine part according to claim 6,
**characterized in that**
a central threaded bore is provided in the at least one expansion element (30) and guides a concentric threaded rod so that the latter is able to rotate relative to the expansion element (30).

9. The rotating machine part according to one of claims 3 through 8,
**characterized in that**
the part of the additional mass (23) that is divided by the longitudinal slit (28) is connected on one side to a plurality of guide pins (27) extending at right angles to the plane of the slit and on the other side, is connected to guide holes that are matched to these guide pins.

## Revendications

1. Pièce de machine rotative comportant un dispositif amortisseur de vibrations amorti formé d'une masse additionnelle (23) et d'un système d'amortissement/de ressort additionnel, le dispositif amortisseur de vibrations étant introduit dans une cavité concentrique de la pièce de machine (20), la masse additionnelle (23) étant disposée centralement et le système d'amortissement/de ressort additionnel étant formé d'au moins une couche amortisseuse élastique (22) qui est disposée concentriquement entre la masse additionnelle (23) et la surface intérieure de la pièce de machine (20) qui délimite la cavité,
**caractérisée en ce**
**que** la circonférence extérieure de la masse additionnelle (23) est variable.

2. Pièce de machine rotative selon la revendication 1,
**caractérisée en ce**
**que** la couche (22) est logée dans une douille concentrique (21) dont la circonférence est variable.

3. Pièce de machine rotative selon l'une des revendications 1 ou 2,
**caractérisée en ce**
**que** la masse additionnelle (23) et/ou la douille (21) présente/présentent au moins une fente longitudinale (28).

4. Pièce de machine rotative selon la revendication 3,
**caractérisée en ce**
**que** la masse additionnelle (23) et/ou la douille (21) est/sont divisée(s) en au moins deux moitiés dans la direction longitudinale.

5. Pièce de machine rotative selon l'une des revendications précédentes,
**caractérisée en ce**
**qu'**au moins un élément expansible (30) est présent, au moyen duquel la circonférence de la masse additionnelle (23) peut être réglée.

6. Pièce de machine rotative selon la revendication 5,
**caractérisée en ce**
**que** ledit au moins un élément expansible (30) est de forme conique et est introduit dans un logement concentrique (26) à l'intérieur de la masse additionnelle (23), dans lequel il est monté réglable axialement.

7. Pièce de machine rotative selon la revendication 6,
**caractérisée en ce**
**que** ledit au moins un élément expansible (30) est pourvu d'un filetage extérieur (31) et le logement (26) d'un filetage intérieur (29) adapté à celui-ci.

8. Pièce de machine rotative selon la revendication 6,
**caractérisée en ce**
**qu'**un trou fileté central est ménagé dans ledit au moins un élément expansible (30), à travers lequel une tige filetée concentrique est guidée en rotation par rapport à l'élément expansible (30).

9. Pièce de machine rotative selon l'une des revendications 3 à 8,
**caractérisée en ce**
**que** la partie de la masse additionnelle (23) séparée par la fente longitudinale (28) est pourvue d'un côté de plusieurs tenons de guidage (27) s'étendant perpendiculairement au plan de la fente et de l'autre côté de trous de guidage adaptés à ceux-ci.
